# EUROPEAN PATENT SPECIFICATION

(11) **EP 3 526 016 B1**
(45) Date of publication and mention of the grant of the patent: **10.09.2025**
(21) Application number: 17797739.4
(22) Date of filing: 12.10.2017
(51) Int. Cl.: B29D 11/00, B29C 33/48

(54) **METHOD FOR PRODUCING CONTACT LENSES**
VERFAHREN ZUR HERSTELLUNG VON KONTAKTLINSEN
PROCÉDÉ DE FABRICATION DE LENTILLES DE CONTACT

(30) Priority: 14.10.2016 US 201662408250 P
(43) Date of publication of application: 21.08.2019
(73) Proprietor: Alcon Inc., 1701 Fribourg (CH)
(72) Inventor: LU, Honghui, Johns Creek, Georgia 30097 (US); HAKEN, Uwe, Johns Creek, Georgia 30097 (US); NIU, Xuxian, Johns Creek, Georgia 30097 (US); KIM, Alexander W., Johns Creek, Georgia 30097 (US)
(74) Representative: Bohest AG
(86) International application number: PCT/IB2017/056329
(87) International publication number: WO 2018/069868

(56) References cited:
- EP-A1- 1 658 958
- EP-A2- 0 988 961
- WO-A1-2008/074541
- JP-A- 2003 103 537
- JP-B2- 5 428 005
- US-A1- 2004 061 246
- US-A1- 2006 202 367
- US-A1- 2007 114 685
- US-B1- 6 558 584

## Description

The present invention is related to an improved method for producing contact lenses.

### BACKGROUND OF THE INVENTION

Contact lenses can be manufactured economically in large numbers by a conventional full-mold process involving disposable molds, the examples of which are disclosed in, for example, PCT patent application no. WO/87/04390, in EP-A 0 367 513 or in U.S. Patent No. 5,894,002. JP5428005B2 discloses the preamble of claim 1. In a conventional molding process, a predetermined amount of a polymerizable or crosslinkable material typically is introduced into a disposable mold including a female (concave) mold half and a male (convex) mold half. The female and male mold halves cooperate with each other to form a mold cavity having a desired geometry for a contact lens. A minor surplus of polymerizable or crosslinkable material may be used so that when the male and female halves of the mold are closed it is ensured that the mold cavity is completely filled, and any excess amount of the material is expelled out into an overflow area adjacent to the mold cavity. The polymerizable or crosslinkable material remaining within the mold is polymerized or cross-linked by means of actinic radiation (e.g., UV irradiation, ionized radiation, microwave irradiation) or by means of heating. Both the starting material in the mold cavity and the excess material in the overflow area are thereby hardened. Subsequently, the mold is opened and the polymerized but as yet unhydrated contact lens is removed and further processed.

Unfortunately, it is often not possible to predict reliably to which of the two mold halves the contact lens will adhere: in some cases it adheres to the male mold half (mold half with the convex optical molding surface) and, in others, it stays in the female mold half (mold half with the concave optical molding surface). After opening of the mold, therefore, a check generally needs to be made to discover on or in which mold half the polymerized but as yet unhydrated contact lens is located.

Therefore, there is a need to provide a process for casting molding contact lenses with enhanced quality and enhanced yield achieved by omitting the previously required check to discover on or in which mold half the contact lens is located after the mold has been opened. Therefore, the process can nevertheless proceed automatically since it can reliably be assumed that the contact lens will adhere to one of the two mold halves. The process can also be simplified to need to optimize only for one mold half.

### SUMMARY OF THE INVENTION

The invention provides a method for producing contact lenses according to claim 1.

The invention also provides an apparatus for demolding contact lenses from molds according to claim 7.

The present invention provides the foregoing and other features, and the advantages of the invention will become further apparent from the following detailed description of the presently preferred embodiments, read in conjunction with the accompanying figures. The detailed description and figures are merely illustrative of the invention and do not limit the scope of the invention, which is defined by the appended claims.

### BRIEF DESCRIPTION OF THE DRAWINGS

FIG. 1 is a cross-sectional view of a mold according to a preferred embodiment of the invention.
FIG. 2 illustrates schematically a process for separating the male and female mold halves of a lens-forming mold according to the invention and an apparatus for performing a method of the invention.

### DESCRIPTION OF PREFERRED EMBODIMENTS

Reference now will be made in detail to the embodiments of the invention, one or more examples of which are set forth below. Each example is provided by way of explanation of the invention, not limitation of the invention. In fact, it will be apparent to those skilled in the art that various modifications and variations can be made in the present invention without departing from the scope of the invention. For instance, features illustrated or described as part of one embodiment, can be used on another embodiment to yield a still further embodiment. Thus, it is intended that the present invention cover such modifications and variations as come within the scope of the appended claims. Other objects, features and aspects of the present invention are disclosed in or are obvious from the following detailed description. It is to be understood by one of ordinary skill in the art that the present discussion is a description of exemplary embodiments only, and is not intended as limiting the broader aspects of the present invention.

Unless defined otherwise, all technical and scientific terms used herein have the same meaning as commonly understood by one of ordinary skill in the art to which this invention belongs. Generally, the nomenclature used herein and the laboratory procedures are well known and commonly employed in the art. Conventional methods are used for these procedures, such as those provided in the art and various general references. Where a term is provided in the singular, the inventors also contemplate the plural of that term.

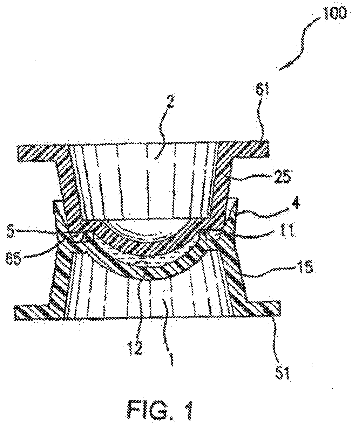

FIG. 1 schematically illustrates a preferred mold 100 used in the methods and apparatus of the invention. The mold 100 includes a female mold half 1 and male mold half 2.

The male mold half 2 includes a base 61, a substantially cylindrical body 25 which extends upward from base 61, a generally convexly-shaped optical molding surface defining the posterior (concave) surface of a molded contact lens, and an annular shoulder 65 which surrounds the optical molding surface. The optical molding surface of the male mold half protrudes outward from the body 25. The annular shoulder 65 shown is flat. It is understood that the annular should 65 can have any suitable surface, such as, e.g., a tilted surface. The male mold half also has a non-optical mold surface, which is the generally concave-shaped area or surface on the opposite side from the convexly-shaped optical molding surface.

The female mold half 1 includes a base 51, a substantially cylindrical body 15 which extends upward from base 51, a generally concave-shaped optical molding surface defining the anterior (convex) surface of a molded contact lens, and a collar 4. The optical molding surface of the female mold half recesses downward from the top of the body 15. Collar 4 (or up-protruding flange) is preferably integral part of the female mold half 1 and protrudes upward from the top of the body 15. A circumferential groove (or recessed area) 11 is formed on top of the body 15 outside of the optical molding surface and functions as an overflow for any excess polymerizable lens-forming material. The female mold half also has a non-optical mold surface, which is the generally convexly-shaped area or surface on the opposite side from the concave-shaped optical molding surface.

The term "collar" as used herein refers to a peripheral circular part which protrudes upward from the top of body of one of the two mating mold halves. A collar can be attached to or preferably be an integral part of that mold half and which can encircle the other mold half to provide a tight seal between the two mold halves. It is understood that the collar can be provided on either of the male and female mold halves.

The female mold half 1 and a male mold half 2 are configured to receive each other such that a contact lens forming cavity 12 is formed between the optical molding surfaces of the male mold half and the female mold half. The collar 4 encircles the body 25 of the male mold half 2 to provide a tight seal 5 between the female and male mold halves when the mold is closed. Typically, there is no lens material in the seal.

In operation, mold halves 1 and 2 can be first injection molded from a plastic resin in an injection molding apparatus, as well known to a person skilled in the art. A specific amount, e.g., an amount sufficient to fill the mold cavity without introducing too much waste, of a polymerizable lens-forming material is typically dispensed into the female mold half 1 by means of a dispensing device. Thereafter, the male mold half 2 is put on and the mold 100 is closed (FIG. 1). As the mold 100 closes, if there is any excess polymerizable lens-forming material, it will be pressed into an overflow area 11 provided on the female mold half 1.

Subsequently, the closed mold 100 containing the polymerizable lens-forming material is subjected to actinic irradiation (e.g., UV radiation or visible light radiation), or heat radiation, at least in the region of the lens forming cavity 12. For this purpose, at least one of the mold halves is transparent to the actinic radiation (e.g., UV light) at least in the region of the molding surface. Thus, at least the polymerizable lens-forming material in the lens forming cavity 12 is polymerized. It is also possible for any polymerizable lens-forming material in the overflow area 11 to be polymerized. This is advantageous in the respect that, when the mold is opened, the excess polymerized lens-forming material then remains in the overflow area 11 of the female mold half 1, while the contact lens adhering to the male mold half 2 can be removed and further processed together with male mold half 2.

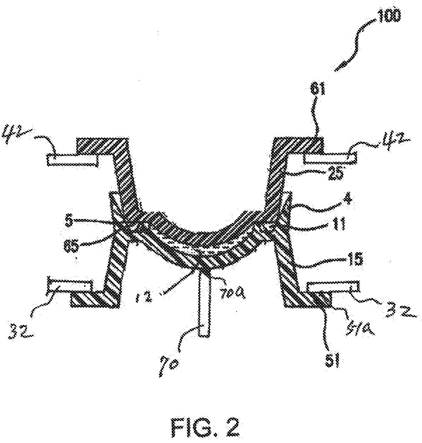

Subsequently, applying a force to non-optical surface of the female mold at a location about the center area of non-optical molding surface at an angle of less than about 30 degrees, preferably less than about 10 degrees, most preferably less than about 5 degrees (i.e., in a direction substantially normal to center area of non-optical molding surface) relative to the axis of the mold to deform the female mold surface which breaks the bonds between the optical molding surface of the female mold and the lens, as shown in FIG. 2. Various ways of applying a force to non-optical surface of the female mold at a location about the center area of non-optical molding surface along the axis of the mold to deform the female mold surface which breaks the bonds between the optical molding surface of the female mold and the lens. It is understood that the mold-opening device can have any configurations known to a person skilled in the art for performing the function of separating two mold halves from each other. For example, referring to FIG. 2, the demolding assembly includes a pin 70 positionable against the center area of the non-optical molding surface of the female mold section. The pin 70 may have a flat free end 70a to enable a surface contact between the free end 70a and the center area of non-optical molding surface of the female mold. It will be appreciated that the scope of the invention is not limited to such a particular flat configuration of the pin end 70a, for example the pin may have a or a somewhat concave-shaped free end to more closely match the shape of the shape of the non-optical molding surface of the female mold half, or a somewhat convexly rounded free end to more closely match the shape of the shape of the non-optical molding surface of the male mold half. In the present embodiment, the pin 70 is movable and the female mold remains stationary by applying a restraining force to female mold half applying a restraining force to female mold half with a first pry finger set 32 for maintaining the female mold half in a fixed position. However, it is possible to arrange the assembly so that the female mold is movable toward the pin 70 while the pin 70 remains stationary, or so that both the pin 70 and the female mold can be moved relative to each other.

In use, during the demolding operation, the free end 70a of the pin 70 applies a longitudinally directed force to the central portion of the non-optical surface of the female mold. The first pry finger set 32 applies a counteractive force against the end face 51a of the flange 51 of the female mold section 1. Consequently, the female mold section is deformed or compressed between the free end 70a of the pin 70 and the first pry finger set 32. The force acts to deform the curved part of the female mold section and breaks the adhesive bond between the lens-forming optical surface of the female mold section 1 and the anterior surface of the lens. In this fashion, the adherence force between the lens and the optical surface of the female mold half is reduced, and therefore the lens is more likely to remain adhered to the optical surface of the male mold half.

Then, apply a vertical lifting movement to the male mold with a second pry finger set (while maintaining the restraints on the female mold so as to effectuate gradual separation between the female mold and the male mold.

After separating the male mold and the female mold,the contact lens adheres to the male mold even though the molding surfaces of the female mold and male mold are not treated before or after dispensing a polymerizable lens-forming material into one of the mold halves to render the molded contact lens preferentially adhered to the female mold or male mold when separating the mold.

After breaking the bond between the optical molding surface of the female mold and the lens, the mold is separated, the molded contact lens adhering to the male mold half 2. It is surprising to find out that, according to the present invention, the molded contact lens typically adheres to the male mold half even though the molding surfaces of the female mold and male mold are not treated (before or after dispensing of the polymerizable lens-forming material) to render the molded contact lens preferentially adhered to the female mold or male mold when separating the mold.

Once the mold sections have been separated, the lens will adhere to a surface of the male mold sections and must therefore be released from the male mold section. According to the present application as mentioned above, the lens typically remains adhered to the male mold section. Both wet and dry release methods of lens release have been proposed in the prior art. In wet lens release methods, an aqueous solution is used to wet the hydrophilic lens which absorbs water and swells, causing the lens to separate from the mold surface. For example, wet release methods are discussed in U. S. Pat. No. 5,264,161. In dry release methods, the lens is removed from the associated mold surface while still in the dry state. For example, dry release methods are discussed in U. S. Pat. No. 5,271,875.

Once the lens is released from the male mold section, the released lens will be hydrated. Any hydration device can be used in the invention.

In another aspect, the disclosure provides an apparatus for demolding contact lenses from molds including a female mold half having a first optical molding surface and a male mold half having a second optical molding surface, wherein the female and male mold halves are configured to receive each other such that a mold cavity is formed between the first and second optical molding surfaces, each of the female mold and the male mold having circular circumferential flanges, the apparatus including:
a mold-prying device, and
a pin-pushing device,
wherein the mold-prying device includes two sets of pry fingers, wherein the two sets of pry fingers are inserted between the circular circumferential flanges of each female mold and male mold of the contact lens mold assembly, a first set of pry fingers located above the flange of the female mold for keeping the female mold in a fixed position and a second set of pry fingers located beneath the flange of the male mold for lifting movement,
wherein the pin-pushing device has a pin for applying a force to non-optical surface of the female mold at a location about the center area of non-optical molding surface along the longitudinal axis of the mold to deform the female mold to deform or compress the female mold between the pin and the first set of pry fingers so as to break the bonds between the optical molding surface of the female mold and the lens, thereby the lens adheres to the male mold when separating the mold.

It is understood that methods of manufacturing mold halves for cast molding a contact lens are generally well known to those of ordinary skill in the art. The process of the present invention is not limited to any particular method of forming a mold half. In fact, any method of forming a mold half can be used in the present invention. However, for illustrative purposes, the above discussion has been provided as one embodiment of forming mold halves that can be used in accordance with the present invention.

A "polymerizable lens-forming material" refers to a material which can be polymerized and/or crosslinked by actinic radiation to form a contact lens. A lens-forming material can be any materials known to a skilled artisan. For example, a polymerizable lens-forming material can be a fluid composition (i.e., a solution or a solvent-free liquid or melt at a temperature below 60°C) including one or more prepolymers, one or more monomers, one or more macromers, or combinations thereof. A lens-forming material can further include other components, such as a photoinitiator, a visibility tinting agent, UV-blocking agent, photosensitizers, heat initiators, and the like. Preferably, a polymerizable lens-forming material used in the present invention can form a hydrogel material and more preferably can form a silicone hydrogel.

"Polymerizing the polymerizable material" refers to the polymerizable material can be cured or polymerized by actinic radiation.

" Actinic radiation" refers to radiation of a suitable form of energy. Examples of actinic radiation includes without limitation light radiation (e.g., UV radiation), gamma radiation, electron radiation, X-ray irradiation, microwave irradiation, thermal radiation and the like. According to the present invention, preferably, a polymerizable lens-forming material is polymerized by a thermal radiation.

A "hydrogel material" refers to a polymeric material which can absorb at least 10 percent by weight of water when it is fully hydrated. Generally, a hydrogel material is obtained by polymerization or copolymerization of at least one hydrophilic monomer in the presence of or in the absence of additional monomers and/or macromers. Exemplary hydrogels include, but are not limited to, poly(vinyl alcohol) (PVA), modified polyvinylalcohol (e.g., as nelfilcon A), poly(hydroxyethyl methacrylate), poly(vinyl pyrrolidone), PVAs with polycarboxylic acids (e.g., carbopol), polyethylene glycol, polyacrylamide, polymethacrylamide, silicone-containing hydrogels, polyurethane, polyurea, and the like. A hydrogel can be prepared according to any methods known to a person skilled in the art.

A "silicone hydrogel" refers to a hydrogel containing silicone. A silicone hydrogel typically is obtained by copolymerization of a polymerizable composition including at least one silicone-containing vinylic monomer or at least one silicone-containing vinylic macromer or at least one silicone-containing prepolymer having ethylenically unsaturated groups.

A "vinylic monomer" refers to a compound that has one sole ethylenically-unsaturated group.

The term "olefinically unsaturated group" or "ethylenically unsaturated group" is employed herein in a broad sense and is intended to encompass any groups containing at least one >C=C< group.

Various embodiments are evident. Although one mold (FIG. 1) is illustrated, the invention is in no way limited to this specific mold. A person skilled in the art can readily determine other molds for which the invention has applicability.

The invention has been described in detail, with particular reference to certain preferred embodiments, in order to enable the reader to practice the invention without undue experimentation. A person having ordinary skill in the art will readily recognize that many of the previous components, compositions, and/or parameters may be varied or modified to a reasonable extent without departing from the scope of the invention. Furthermore, titles, headings, example materials or the like are provided to enhance the reader's comprehension of this document, and should not be read as limiting the scope of the present invention. Accordingly, the invention is defined by the following claims.

## Claims

1. A method for producing a contact lens, comprising:
(a) providing a mold (100) including a female mold half (1) having a first optical molding surface and a male mold half (2) having a second optical molding surface, wherein the female and male mold halves (1, 2) are configured to receive each other such that a mold cavity (12) is formed between the first and second optical molding surfaces, and wherein each of the female mold half (1) and the male mold half (2) has a circular circumferential flange (51, 61);
(b) dispensing a polymerizable lens-forming material into one of the female and male mold halves (1, 2) and mating the female and male mold halves (1, 2) to close the mold (100);
(c) polymerizing the polymerizable lens-forming material located between the female and male mold halves (1, 2), thereby forming a molded contact lens;
(d) inserting a first pry finger set (32) between the circular circumferential flanges (51, 61) of the female mold half (1) and the male mold half (2) of the mold (100),
(e) applying a restraining force to the female mold half (1) with the first pry finger set (32) for maintaining the female mold half (1) in a fixed position;
(f) applying a force to a non-optical surface of the female mold half (1) with a pin (70) at a location about the center area of the non-optical molding surface of the female mold half (1) to deform the female mold half (1), thereby breaking the bonds between the first optical molding surface of the female mold half (1) and the contact lens, and
(g) applying a vertical lifting movement to the male mold half (2) while maintaining the restraining force on the female mold half (1) with the first pry finger set (32) so as to effectuate gradual separation between the female mold half (1) and the male mold half (2),
wherein the contact lens adheres to the male mold half (2) when separating the female and male mold halves (1, 2), provided that the first and second optical molding surfaces of the female mold half (1) and of the male mold half (2) are not treated before or after dispensing the polymerizable lens-forming material into one of the female and male mold halves (1, 2) to render the molded contact lens preferentially adhered to the female mold half (1) or to the male mold half (2) when separating the female and male mold halves (1, 2),
**characterized in that** the contact lens is a silicone hydrogel contact lens, **in that** providing the mold in step (a) comprises providing a mold wherein one of the female and male mold halves (1, 2) has a collar (4) that encircles the other mold half to provide a seal between the female and male mold halves (1, 2) when the mold is (100) closed, **in that** step (d) further comprises inserting a second pry finger set (42) between the circular circumferential flanges (51, 61) of the female mold half (1) and the male mold half (2) of the mold, wherein the first pry finger set (32) is located above the circumferential flange (51) of the female mold half (1) and the second pry finger set (42) is located beneath the circumferential flange (61) of the male mold half (2), **and in that** applying the vertical lifting movement to the male mold half in step (g) comprises applying a vertical lift movement to the male mold half with the second pry finger set (42).

2. The method of claim 1, wherein the force is applied to the non-optical surface of the female mold half (1) with the pin (70) at the location about the center area of the non-optical surface of the female mold half (1) at an angle of less than about 30 degrees relative to a longitudinal axis of the mold (100).

3. The method of claim 2, wherein the force is applied to the non-optical surface of the female mold half (1) with the pin (70) at the location about the center area of non-optical surface of the female mold half (1) at an angle of less than about 10 degrees relative to the longitudinal axis of the mold (100).

4. The method of claim 3, wherein the force is applied to the non-optical surface of the female mold half (1) with the pin (70) at a location about the center area of the non-optical surface of the female mold half (1) at an angle of less than about 5 degrees relative to the longitudinal axis of the mold (100).

5. The method of claim 1, wherein the polymerizable lens-forming material comprises at least one silicone-containing vinylic monomer or at least one silicone-containing vinylic macromer or at least one silicone-containing prepolymer having ethylenically unsaturated groups.

6. The method of claim 5, wherein the polymerizable lens-forming material is polymerized by thermal curing.

7. An apparatus for demolding a contact lens from a mold including a female mold half (1) having a first optical molding surface and a male mold half (2) having a second optical molding surface, wherein the female and male mold halves (1, 2) are configured to receive each other such that a mold cavity (12) is formed between the first and second optical molding surfaces, each of the female mold half (1) and the male mold half (2) having a circular circumferential flange (51, 61), the apparatus comprising:
a mold-prying device, and
a pin-pushing device,
wherein the mold-prying device comprises a first pry finger set (32) configured to be inserted between the circular circumferential flanges (51, 61) of the female mold half (1) and the male mold half (2) of the mold and wherein the pin-pushing device has a pin (70) for applying a force to a non-optical surface of the female mold half (1) at a location about the center area of the non-optical molding surface of the female mold half (1) and along a longitudinal axis of the mold (100) to deform the female mold half (2) between the pin (70) and the first set of pry fingers (32) so as to break the bonds between the optical molding surface of the female mold half (1) and the contact lens, whereby the contact lens adheres to the male mold half (2) when separating the female and male mold halves (1, 2),
**characterized in that** the contact lens is a silicone hydrogel contact lens,
**in that** one of the female and male mold halves (1, 2) has a collar (4) that encircles the other mold half to provide a seal between the female and male mold halves (1, 2) when the mold is (100) closed,
**and in that** the mold-prying device further comprises a second pry finger set (42) inserted between the circular circumferential flanges (51, 61) of the female mold half (1) and the male mold half (2) of the mold, the first pry finger set (32) located above the circumferential flange (51) of the female mold half (1) for keeping the female mold half (1) in a fixed position and the second pry finger set (42) located beneath the circumferential flange (61) of the male mold half (2) for applying a vertical lifting movement to the male mold half (2).

8. The apparatus of claim 7, wherein the pin-pushing device having the pin (70) is configured to apply the force directly to the non-optical surface of the female mold half (1) with the pin (70) at the location about the center area of the non-optical molding surface of the female mold half (1) at an angle of less than about 30 degrees relative to the longitudinal axis of the mold (100).

9. The apparatus of claim 8, wherein the pin-pushing device having the pin (70) is configured to apply the force directly to the non-optical surface of the female mold half (1) with the pin (70) at the location about the center area of non-optical molding surface of the female mold half (1) at an angle of less than about 10 degrees relative to the longitudinal axis of the mold (100).

10. The apparatus of claim 9, wherein the pin-pushing device having the pin (70) is configured to apply the force directly to non-optical surface of the female mold half (1) with the pin (70) at the location about the center area of the non-optical molding surface of the female mold half (1) at an angle of less than about 30 degrees relative to the longitudinal axis of the mold (100).

## Patentansprüche

1. Verfahren zur Herstellung einer Kontaktlinse, umfassend:
(a) Bereitstellen eines Formwerkzeugs (100), das eine Matrizenformhälfte (1) mit einer ersten optischen Formfläche und eine Patrizenformhälfte (2) mit einer zweiten optischen Formfläche enthält, wobei die Matrizen- und die Patrizenformhälfte (1, 2) dafür gestaltet sind, einander aufzunehmen, so dass ein Formhohlraum (12) zwischen der ersten und der zweiten optischen Formfläche gebildet wird, und wobei sowohl die Matrizenformhälfte (1) als auch die Patrizenformhälfte (2) einen kreisförmigen Umfangsflansch (51, 61) aufweisen;
(b) Ausgeben eines polymerisierbaren linsenbildenden Materials in eine von der Matrizen- und der Patrizenformhälfte (1, 2) und Zusammenfügen der Matrizen- und Patrizenformhälften (1, 2), um das Formwerkzeug (100) zu schließen;
(c) Polymerisieren des polymerisierbaren linsenbildenden Materials, das zwischen der Matrizen- und der Patrizenformhälfte (1, 2) angeordnet ist, um eine geformte Kontaktlinse zu bilden;
(d) Einführen eines ersten Hebelfingersatzes (32) zwischen die kreisförmigen Umfangsflansche (51, 61) der Matrizenformhälfte (1) und die Patrizenformhälfte (2) des Formwerkzeugs (100),
(e) Ausüben einer Rückhaltekraft auf die Matrizenformhälfte (1) mit dem ersten Hebelfingersatz (32), um die Matrizenformhälfte (1) in einer festen Position zu halten;
(f) Anwenden einer Kraft auf eine nicht-optische Oberfläche der Matrizenformhälfte (1) mit einem Stift (70) an einer Stelle um den mittleren Bereich der nicht-optischen Formfläche der Matrizenformhälfte (1), um die Matrizenformhälfte (1) zu verformen, wodurch die Bindungen zwischen der ersten optischen Formfläche der Matrizenformhälfte (1) und der Kontaktlinse gebrochen werden, und
(g) Anwenden einer vertikalen Hebebewegung auf die Patrizenformhälfte (2), während die Rückhaltekraft auf die Matrizenformhälfte (1) mit dem ersten Hebelfingersatz (32) aufrechtgehalten wird, um allmähliche Trennung zwischen der Matrizenformhälfte (1) und der Partrizenformhälfte (2) zu bewirken,
wobei die Kontaktlinse an der Partrizenformhälfte (2) haftet, wenn die Matrizen- und die Patrizenformhälfte (1, 2) getrennt werden, mit der Maßgabe, dass die erste und die zweite optische Formfläche der Matrizenformhälfte (1) und der Partrizenformhälfte (2) vor oder nach dem Ausgeben des polymerisierbaren linsenbildenden Materials in eine von der Matrizen- und der Patrizenformhälfte (1, 2) nicht behandelt werden, um die geformte Kontaktlinse bei Trennen der Matrizen- und der Patrizenformhälfte (1, 2) vorzugsweise an der Matrizenformhälfte (1) oder an der Patrizenformhälfte (2) haften zu lassen,
**dadurch gekennzeichnet, dass** die Kontaktlinse eine Silicon-Hydrogel-Kontaktlinse ist,
dass Bereitstellen des Formwerkzeugs bei Schritt (a) Bereitstellen eines Formwerkzeugs umfasst, bei dem eine von der Matrizen- und der Patrizenformhälfte (1, 2) einen Kragen (4) aufweist, der die andere Formhälfte umgibt, um eine Dichtung zwischen der Matrizen- und der Partrizenformhälfte (1, 2) bereitzustellen, wenn das Formwerkzeug (100) geschlossen ist,
dass Schritt (d) ferner Einführen eines zweiten Hebelfingersatzes (42) zwischen die kreisförmigen Umfangsflansche (51, 61) der Matrizenformhälfte (1) und die Patrizenformhälfte (2) des Formwerkzeugs umfasst, wobei der erste Hebelfingersatz (32) über dem Umfangsflansch (51) der Matrizenformhälfte (1) angeordnet ist und der zweite Hebelfingersatz (42) unter dem Umfangsflansch (61) der Patrizenformhälfte (2) angeordnet ist,
und dass Anwenden der vertikalen Hebebewegung auf die Patrizenformhälfte bei Schritt (g) Anwenden einer vertikalen Hebebewegung auf die Patrizenformhälfte mit dem zweiten Hebelfingersatz (42) umfasst.

2. Verfahren nach Anspruch **1,** wobei die Kraft auf die nicht-optische Oberfläche der Matrizenformhälfte (1) mit dem Stift (70) an der Stelle um den mittleren Bereich der nicht-optischen Oberfläche der Matrizenformhälfte (1) in einem Winkel von weniger als etwa 30 Grad relativ zu einer Längsachse des Formwerkzeugs (100) ausgeübt wird.

3. Verfahren nach Anspruch 2, wobei die Kraft auf die nicht-optische Oberfläche der Matrizenformhälfte (1) mit dem Stift (70) an der Stelle um den mittleren Bereich der nicht-optischen Oberfläche der Matrizenformhälfte (1) in einem Winkel von weniger als etwa 10 Grad relativ zu der Längsachse des Formwerkzeugs (100) ausgeübt wird.

4. Verfahren nach Anspruch 3, wobei die Kraft auf die nicht-optische Oberfläche der Matrizenformhälfte (1) mit dem Stift (70) an einer Stelle um den mittleren Bereich der nicht-optischen Oberfläche der Matrizenformhälfte (1) in einem Winkel von weniger als etwa 5 Grad relativ zu einer Längsachse des Formwerkzeugs (100) ausgeübt wird.

5. Verfahren nach Anspruch 1, wobei das polymerisierbare linsenbildende Material wenigstens ein siliconhaltiges vinylisches Monomer oder wenigstens ein siliconhaltiges vinylisches Makromer oder wenigstens ein siliconhaltiges Präpolymer mit ethylenisch ungesättigten Gruppen umfasst.

6. Verfahren nach Anspruch 5, wobei das polymerisierbare linsenbildende Material durch thermisches Härten polymerisiert wird.

7. Vorrichtung zum Entformen einer Kontaktlinse aus einem Formwerkzeug, das eine Matrizenformhälfte (1) mit einer ersten optischen Formfläche und eine Patrizenformhälfte (2) mit einer zweiten optischen Formfläche enthält, wobei die Matrizen- und die Patrizenformhälfte (1, 2) dafür gestaltet sind, einander aufzunehmen, so dass ein Formhohlraum (12) zwischen der ersten und der zweiten optischen Formfläche gebildet wird, wobei sowohl die Matrizenformhälfte (1) als auch die Patrizenformhälfte (2) einen kreisförmigen Umfangsflansch (51, 61) aufweisen, wobei die Vorrichtung umfasst:
eine Formwerkzeug-hebelnde Vorrichtung und
eine Stiftdrückvorrichtung,
wobei die Formwerkzeug-hebelnde Vorrichtung einen ersten Hebelfingersatz (32) umfasst, der dafür gestaltet ist, zwischen die kreisförmigen Umfangsflansche (51, 61) der Matrizenformhälfte (1) und die Patrizenformhälfte (2) des Formwerkzeugs eingeführt zu werden
und wobei die Stiftdrückvorrichtung einen Stift (70) zum Ausüben einer Kraft auf eine nicht-optische Oberfläche der Matrizenformhälfte (1) an einer Stelle um den mittleren Bereich der nicht-optischen Formfläche der Matrizenformhälfte (1) und entlang einer Längsachse der Formwerkzeug (100) aufweist, um die Matrizenformhälfte (2) zwischen dem Stift (70) und dem ersten Hebelfingersatz (32) zu verformen, um die Bindungen zwischen der optischen Formfläche der Matrizenformhälfte (1) und der Kontaktlinse zu brechen, wobei die Kontaktlinse bei Trennen der Matrizen- und der Patrizenformhälfte (1, 2) an der Patrizenformhälfte (2) haftet,
**dadurch gekennzeichnet, dass** die Kontaktlinse eine Silicon-Hydrogel-Kontaktlinse ist,
dass eine von der Matrizen- und der Patrizenformhälfte (1, 2) einen Kragen (4) aufweist, der die andere Formhälfte umgibt, um eine Dichtung zwischen der Matrizen- und der Patrizenformhälfte (1, 2) bereitzustellen, wenn das Formwerkzeug (100) geschlossen ist,
und dass die Formhebelvorrichtung ferner einen zweiten Hebelfingersatz (42) umfasst, der zwischen den kreisförmigen Umfangsflanschen (51, 61) der Matrizenformhälfte (1) und der Partrizenformhälfte (2) der Form eingeführt wird, wobei erste Hebelfingersatz (32) oberhalb des Umfangsflanschs (51) der Matrizenformhälfte (1) angeordnet ist, um die Matrizenformhälfte (1) in einer festen Position zu halten, und der zweite Hebelfingersatz (42), unterhalb des Umfangsflanschs (61) der Patrizenformhälfte (2) angeordnet ist, um eine vertikale Hebebewegung auf die Patrizenformhälfte (2) auszuüben.

8. Vorrichtung nach Anspruch 7, wobei die Stiftdrückvorrichtung mit dem Stift (70) dafür gestaltet ist, die Kraft direkt auf die nicht-optische Oberfläche der Matrizenformhälfte (1) mit dem Stift (70) an der Stelle um den mittleren Bereich der nicht-optischen Formfläche der Matrizenformhälfte (1) in einem Winkel von weniger als etwa 30 Grad relativ zu der Längsachse der Formwerkzeug (100) auszuüben.

9. Vorrichtung nach Anspruch 8, wobei die Stiftdrückvorrichtung mit dem Stift (70) dafür gestaltet ist, die Kraft direkt auf die nicht-optische Oberfläche der Matrizenformhälfte (1) mit dem Stift (70) an der Stelle um den mittleren Bereich der nicht-optischen Formfläche der Matrizenformhälfte (1) in einem Winkel von weniger als etwa 10 Grad relativ zu der Längsachse der Formwerkzeug (100) auszuüben.

10. Vorrichtung nach Anspruch 9, wobei die Stiftdrückvorrichtung mit dem Stift (70) dafür gestaltet ist, die Kraft direkt auf die nicht-optische Oberfläche der Matrizenformhälfte (1) mit dem Stift (70) an der Stelle um den mittleren Bereich der nicht-optischen Formfläche der Matrizenformhälfte (1) in einem Winkel von weniger als etwa 30 Grad relativ zu der Längsachse der Formwerkzeug (100) auszuüben.

## Revendications

1. Procédé de fabrication d'une lentille de contact, comprenant :
(a) la fourniture d'un moule (100) comprenant une moitié de moule femelle (1) ayant une première surface de moulage optique et une moitié de moule mâle (2) ayant une seconde surface de moulage optique, les moitiés de moule femelle et mâle (1, 2) étant configurées pour se recevoir l'une dans l'autre de manière à former une cavité de moule (12) entre les première et seconde surfaces de moulage optiques, et chacune des moitiés de moule femelle (1) et mâle (2) ayant une bride circonférentielle circulaire (51, 61) ;
(b) la distribution d'un matériau de formation de lentille polymérisable dans l'une des moitiés de moule femelle et mâle (1, 2) et l'appariement des moitiés de moule femelle et mâle (1, 2) pour fermer le moule (100) ;
(c) la polymérisation du matériau de formation de lentille polymérisable situé entre les moitiés de moule femelle et mâle (1, 2), formant ainsi une lentille de contact moulée ;
(d) l'insertion d'un premier ensemble de doigts de levier (32) entre les brides circonférentielles circulaires (51, 61) de la moitié de moule femelle (1) et de la moitié de moule mâle (2) du moule (100),
(e) l'application d'une force de retenue à la moitié de moule femelle (1) à l'aide du premier ensemble de doigts de levier (32) afin de maintenir la moitié de moule femelle (1) dans une position fixe ;
(f) l'application d'une force sur une surface non optique de la moitié de moule femelle (1) à l'aide d'une broche (70) à un emplacement autour de la zone centrale de la surface de moulage non optique de la moitié de moule femelle (1) afin de déformer la moitié de moule femelle (1), rompant ainsi les liaisons entre la première surface de moulage optique de la moitié de moule femelle (1) et la lentille de contact, et
(g) l'application d'un mouvement de levage vertical à la moitié de moule mâle (2) tout en maintenant la force de retenue sur la moitié de moule femelle (1) avec le premier ensemble de doigts de levier (32) de manière à effectuer une séparation progressive entre la moitié de moule femelle (1) et la moitié de moule mâle (2),
la lentille de contact adhérant à la moitié de moule mâle (2) lors de la séparation des moitiés de moule femelle et mâle (1, 2), à condition que les première et seconde surfaces de moulage optique de la moitié de moule femelle (1) et de la moitié de moule mâle (2) ne soient pas traitées avant ou après la distribution du matériau de formation de lentille polymérisable dans l'une des moitiés de moule femelle et mâle (1, 2) afin de rendre la lentille de contact moulée adhérant préférentiellement à la moitié de moule femelle (1) ou à la moitié de moule mâle (2) lors de la séparation des moitiés de moule femelle et mâle (1, 2),
**caractérisé en ce que** la lentille de contact est une lentille de contact en hydrogel de silicone,
**en ce que** la fourniture du moule à l'étape (a) comprend la fourniture d'un moule dans lequel l'une des moitiés de moule femelle et mâle (1, 2) comporte un collier (4) qui entoure l'autre moitié de moule pour fournir un joint d'étanchéité entre les moitiés de moule femelle et mâle (1, 2) lorsque le moule est fermé (100),
**en ce que** l'étape (d) comprend en outre l'insertion d'un deuxième ensemble de doigts de levier (42) entre les brides circonférentielles circulaires (51, 61) de la moitié de moule femelle (1) et de la moitié de moule mâle (2) du moule, le premier ensemble de doigts de levier (32) étant situé au-dessus de la bride circonférentielle (51) de la moitié de moule femelle (1) et le deuxième ensemble de doigts de levier (42) étant situé sous la bride circonférentielle (61) de la moitié de moule mâle (2),
et **en ce que** l'application du mouvement de levage vertical à la moitié de moule mâle à l'étape (g) comprend l'application d'un mouvement de levage vertical à la moitié de moule mâle avec le deuxième ensemble de doigts de levier (42).

2. Procédé selon la revendication 1, la force étant appliquée à la surface non optique de la moitié de moule femelle (1) avec la broche (70) à l'emplacement autour de la zone centrale de la surface non optique de la moitié de moule femelle (1) à un angle inférieur à environ 30 degrés par rapport à un axe longitudinal du moule (100).

3. Procédé selon la revendication 2, la force étant appliquée à la surface non optique de la moitié de moule femelle (1) avec la broche (70) à l'emplacement autour de la zone centrale de la surface non optique de la moitié de moule femelle (1) à un angle inférieur à environ 10 degrés par rapport à l'axe longitudinal du moule (100).

4. Procédé selon la revendication 3, la force étant appliquée à la surface non optique de la moitié de moule femelle (1) avec la broche (70) à un emplacement autour de la zone centrale de la surface non optique de la moitié de moule femelle (1) à un angle inférieur à environ 5 degrés par rapport à l'axe longitudinal du moule (100).

5. Procédé selon la revendication 1, le matériau de formation de lentille polymérisable comprenant au moins un monomère vinylique contenant du silicone ou au moins un macromère vinylique contenant du silicone ou au moins un prépolymère contenant du silicone ayant des groupes éthyléniquement insaturés.

6. Procédé selon la revendication 5, le matériau de formation de lentille polymérisable étant polymérisé par durcissement thermique.

7. Appareil pour démouler une lentille de contact d'un moule comprenant une moitié de moule femelle (1) ayant une première surface de moulage optique et une moitié de moule mâle (2) ayant une seconde surface de moulage optique, les moitiés de moule femelle et mâle (1, 2) étant configurées pour se recevoir l'une dans l'autre de telle sorte qu'une cavité de moule (12) est formée entre les première et seconde surfaces de moulage optiques, chacune des moitiés de moule femelle (1) et mâle (2) comportant une bride circonférentielle circulaire (51, 61), l'appareil comprenant :
un dispositif de dégagement de moule, et
un dispositif de poussée de broche,
le dispositif de dégagement de moule comprenant un premier ensemble de doigts de levier (32) configuré pour être inséré entre les brides circonférentielles circulaires (51, 61) de la moitié de moule femelle (1) et de la moitié de moule mâle (2) du moule
et le dispositif de poussée de broche ayant une broche (70) pour appliquer une force sur une surface non optique de la moitié de moule femelle (1) à un emplacement autour de la zone centrale de la surface de moulage non optique de la moitié de moule femelle (1) et le long d'un axe longitudinal du moule (100) afin de déformer la moitié de moule femelle (2) entre la broche (70) et le premier ensemble de doigts de levier (32) de manière à rompre les liaisons entre la surface de moulage optique de la moitié de moule femelle (1) et la lentille de contact, de sorte que la lentille de contact adhère à la moitié de moule mâle (2) lors de la séparation des moitiés de moule femelle et mâle (1, 2),
**caractérisé en ce que** la lentille de contact est une lentille de contact en hydrogel de silicone,
**en ce que** l'une des moitiés de moule femelle et mâle (1, 2) comporte un collier (4) qui entoure l'autre moitié de moule pour fournir un joint d'étanchéité entre les moitiés de moule femelle et mâle (1, 2) lorsque le moule (100) est fermé,
et **en ce que** le dispositif de dégagement de moule comprend en outre un deuxième ensemble de doigts de levier (42) inséré entre les brides circonférentielles circulaires (51, 61) de la moitié de moule femelle (1) et de la moitié de moule mâle (2) du moule, le premier ensemble de doigts de levier (32) étant situé au-dessus de la bride circonférentielle (51) de la moitié de moule femelle (1) pour maintenir la moitié de moule femelle (1) dans une position fixe et le deuxième ensemble de doigts de levier (42) étant situé sous la bride circonférentielle (61) de la moitié de moule mâle (2) pour appliquer un mouvement de levage vertical à la moitié de moule mâle (2).

8. Appareil selon la revendication 7, le dispositif de poussée de broche comportant la broche (70) étant configuré pour appliquer la force directement sur la surface non optique de la moitié de moule femelle (1) avec la broche (70) à l'emplacement autour de la zone centrale de la surface de moulage non optique de la moitié de moule femelle (1) à un angle inférieur à environ 30 degrés par rapport à l'axe longitudinal du moule (100).

9. Appareil selon la revendication 8, le dispositif de poussée de broche qui comporte la broche (70) étant configuré pour appliquer la force directement sur la surface non optique de la moitié de moule femelle (1) avec la broche (70) à l'emplacement autour de la zone centrale de la surface de moulage non optique de la moitié de moule femelle (1) à un angle inférieur à environ 10 degrés par rapport à l'axe longitudinal du moule (100).

10. Appareil selon la revendication 9, le dispositif de poussée de broche qui comporte la broche (70) étant configuré pour appliquer la force directement sur la surface non optique de la moitié de moule femelle (1) avec la broche (70) à l'emplacement autour de la zone centrale de la surface de moulage non optique de la moitié de moule femelle (1) à un angle inférieur à environ 30 degrés par rapport à l'axe longitudinal du moule (100).
